# EUROPEAN PATENT APPLICATION

(11) **EP 3 364 232 A1**
(43) Date of publication of application: **22.08.2018**
(21) Application number: 17157207.6
(22) Date of filing: 21.02.2017
(51) Int. Cl.: G02B 27/10, F23M 11/04, G02B 27/14

(54) **LIGHT COLLECTION ARCHITECTURE FOR COMBUSTION APPLIANCES**

(71) Applicant: Siemens Aktiengesellschaft, 80333 München (DE)
(72) Inventor: BAUER, Hans-Peter, 76889 Klingenmünster (DE); KIND, Reiner, 76437 Rastatt (DE)
(74) Representative: Maier, Daniel Oliver

(57) **Abstract**

Light collection architecture for combustion appliances. A refraction body (1) comprising first and second outer surfaces, a beam-splitter (2), and a port (4), the port (4) being configured to receive a detection circuit (5) with a sensor member (3), wherein the first outer surface is distinct from the second outer surface, the first outer surface of refraction body (1) being configured to receive a first light signal, the second outer surface of refraction body (1) being configured to receive a second light signal, the refraction body (1) being configured to refract first and second light signals received by the first and by the second outer surfaces in the direction of beam-splitter (2), the beam-splitter (2) being configured to reflect a first portion the first light signal toward port (4), the beam-splitter (2) being configured to transmit a second portion of the second light signal toward port (4).

## Description

### Background

The instant disclosure generally relates to an architecture collecting visible light from a combustion appliance. More particularly, the instant disclosure relates to an optical circuit that collects light from a combustion appliance at a sensor.

Combustion appliances for fossil fuels such as gas burners generally rely on optical sensors that detect the presence of a flame. Signals obtained from these optical sensors are processed to ensure safe operation of the appliance.

Optical sensors suitable for flame detection need to meet a plethora of conflicting technical requirements. They need to exhibit low dark currents in order that false alarms are avoided. Suitable sensors also need be sensitive enough to detect low levels of incident light such as 0.5 Lux. In other words, the sensors and their detection circuits are required to exhibit optimum signal-to-noise ratios. The additional requirement of low-cost sensors further exacerbates the issue.

The patent specification US5923809A, optical power source derived from engine combustion chambers, was published on 13 July 1999. The specification discloses a combustion chamber 12 with a transparent section 12A. A plurality of optical fibres 28 connects to the transparent section 12A and collects light from the combustion chamber 12. The fibres 28 are then bundled in a cable 16 that serves as an extraction means. FIG 4 of US5923809A shows that light from the cable 16 enters a beam splitter 44. Beam splitter 44 supplies a first path with an optical converter 46 and a second path with an optical conditioning network 48. US5923809A does not teach an arrangement with a beam-splitter that collects light from different locations at a single location.

The patent specification US4412445, optical combustion sensor, particularly for use with internal combustion engines, was published on 1 November 1983. The specification discloses a mushroom-shaped head 14 arranged inside a combustion chamber of an engine. Mushroom-shaped head 14 collects light from inside the combustion chamber 10. A glass body 13 connects to the mushroom-shaped head 14 and transmits the light collected by head 14 to an opto-electrical transducer 9a. US4412445 does not teach collection of light from separate optical paths at the location of a single sensor member.

The patent specification US5039491, optical oxygen sensor, was published on 13 August 1991. FIG 10 and FIG 11 of the specification show details of an arrangement for measurement of exposure to oxygen. To that end, a microcomputer 234 triggers a xenon flash 276. A sensor 270 absorbs light from xenon flash 276 and becomes absorptive in the 550 to 750 nm range. Sensor 270 thus returns less light from an LED 242. A first portion of light is transmitted through a beam-splitter 254 before reaching a photodiode 256. A second portion of light is reflected by the same beam-splitter 254 before reaching another photodiode 258. With beam-splitter 254 being dichroic, light originating from xenon flash 276 gets reflected toward photodiode 258 whilst light received from sensor 270 gets transmitted toward photodiode 256. Since absorption by sensor 270 is a function of exposure to oxygen, the signal obtained from photodiode 256 is a measure thereof. The optical assembly shown on FIG 11 requires two separate photodiodes 256, 258 to perform its function. Also, a dichroic beam-splitter 254 or a filter 260 is required in order that the assembly measures exposure to oxygen.

The present disclosure teaches an optical circuit for flame detection that collects light at a single location. The instant disclosure focuses on a circuit for use in combustion appliances for fossil fuels.

### Summary

The present disclosure provides a method and / or an assembly and / or an optical circuit for flame detection in a combustion appliance. A refraction member is employed that is sensitive to light along a first axis and along a second axis with the second axis being different from the first axis. A beam-splitter inside the refraction member transmits light received along either axis in the direction of a sensor member. The arrangement effectively establishes two optical paths that both terminate at the same sensor member. The first of these paths collects light received by the refraction body along the first axis. The second path collects light received by the refraction member along a second axis.

Effective use is made of a sensor member since light originating from inside a combustion chamber reaches the same sensor member. The assembly produces a photocurrent when it receives light.

The above objects are achieved by a method and / or an assembly and / or an optical circuit in accordance with the main claims of this disclosure. Preferred embodiments of the present disclosure are covered by the dependent claims.

Space is often limited inside a controller apparatus with a sensor member inside the apparatus. Due to limited space in a controller apparatus and due to the shape of the sensor member, the sensor member may have to be mounted in a given direction. The instant disclosure allows configuration of optical path, thereby allowing connections to the sensor member from a plurality of directions. It is an object of the instant disclosure to provide a versatile method and / or a versatile assembly and / or a versatile optical circuit for flame detection that alleviates constraints due to limited space in the controller apparatus.

It is also an object of the instant disclosure to provide a method and / or an assembly and / or an optical circuit for flame detection, wherein at least one of the beam-splitters is not dichroic.

It is also an object of the instant disclosure to provide a versatile method and / or a versatile assembly and / or a versatile optical circuit for flame detection, wherein a filter member inhibits adverse effects from long wavelength radiation, in particular from infrared radiation. In a particular embodiment, a sensor member such as a photodiode comprises the filter member.

It is still an object of the instant disclosure to provide a method and / or an assembly and / or an optical circuit for flame detection, wherein the sensor member comprises a photodiode, preferably a photodiode sensitive to visible light in the range between 400 nm to 800 nm.

It is yet another object of the instant disclosure to provide a method and / or an assembly and / or an optical circuit for flame detection, wherein the refraction member comprises a port for introducing the sensor member.

It is also an object of the instant disclosure to provide an assembly and / or an optical circuit for flame detection, wherein the assembly and / or the optical circuit is suitable for manufacture involving large-scale production, in particular suitable for manufacture involving (injection) moulding.

It still is an object of the instant disclosure to provide a combustion appliance, in particular a combustion appliance for fossil fuels, with an assembly and / or with an optical circuit for flame detection according to the instant disclosure.

### Brief description of the drawings

Various features will become apparent to those skilled in the art from the following detailed description of the disclosed non-limiting embodiments. The drawings that accompany the detailed description can be briefly described as follows:
FIG 1 is a cutaway view of a refraction member and a combustion chamber with the combustion chamber in a first position relative to the refraction member.
FIG 2 is a cutaway view of a refraction member and a combustion chamber with the combustion chamber in a second position relative to the refraction member.

### Detailed decription

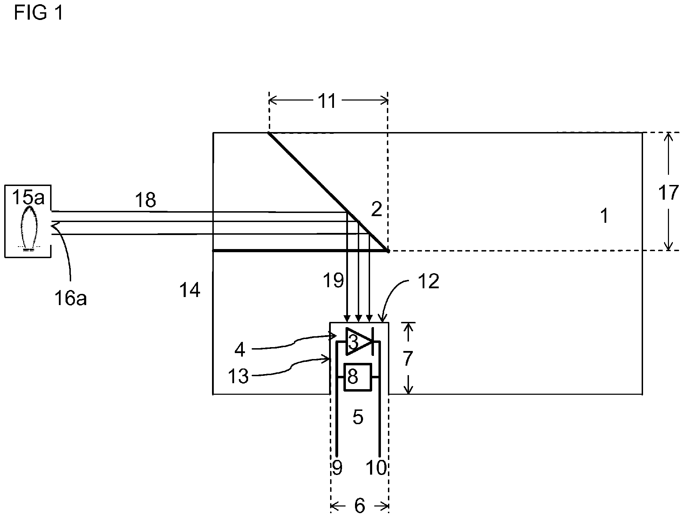

FIG 1 depicts a refraction body 1 with a beam-splitter 2. Beam-splitter 2 is advantageously fully contained inside refraction body 1. Beam-splitter 2 ideally is not dichroic in the range of visible light between 400 nm to 800 nm. Refraction body 1 is preferably made of a (transparent) material with a refraction index n > 1.0003 in the range of visible light between 400 nm and 800 nm.

According to an aspect, beam-splitter 2 comprises a prism and / or a prism assembly. According to another aspect, beam-splitter 2 comprises a surface with an optical coating, in particular a surface with a metallic coating.

In an advantageous embodiment, refraction body 1 is substantially non-transparent at infrared wavelengths of more than 1200 nm, more preferably more than 1000 nm, yet more preferably more than 800 nm. A refraction body 1 that absorbs infrared light inhibits reception of infrared light by sensor member 3, thereby improving on signal-to-noise ratio. It is envisaged that refraction body 1 is made of a material with an attenuation length at optical wavelengths of 800 nm of 1 mm, preferably of 0.1 mm, still more preferably of 0.01 mm. It is also envisaged that refraction body 1 is made of a material with an attenuation length at optical wavelengths of 1000 nm of 1 mm, preferably of 0.1 mm, still more preferably of 0.01 mm. It is still envisaged that refraction body 1 is made of a material with an attenuation length at optical wavelengths of 1200 nm of 1 mm, preferably of 0.1 mm, still more preferably of 0.01 mm.

According to an aspect, manufacture of refraction body 1 involves (injection) moulding. According to another aspect, manufacture of refraction body 1 involves additive manufacturing such as three-dimensional printing.

Refraction body 1 provides a port 4. Port 4 provides an opening and / or an orifice and / or an aperture that allows for insertion of a detection circuit 5 into refraction body 1. Detection circuit 5 provides a sensor member 3 sensitive to visible light. Sensor member 3 advantageously comprises a photodiode.

In an embodiment, port 4 comprises a slot with a diameter dimension 6 and with a depth dimension 7. Depth dimension 7 of port 4 is at least as large as diameter dimension 6 of port 4. More preferably depth 7 of port 4 is twice its diameter 6, yet more preferably depth 7 of port 4 is five times its diameter 6. Detection circuit 5 comes with suitable dimensions that enable (complete) insertion of detection circuit 5 in port 4. In another embodiment, port 4 comprises a recess with a diameter dimension 6 and with a depth dimension 7. Depth dimension 7 of port 4 is at least as large as diameter dimension 6 of port 4. More preferably depth 7 of port 4 is twice its diameter 6, yet more preferably depth 7 of port 4 is five times its diameter 6. Detection circuit 5 comes with suitable dimensions that enable (complete) insertion of detection circuit 5 in port 4. In yet another embodiment, port 4 comprises a bore with a diameter dimension 6 and with a depth dimension 7. Depth dimension 7 of port 4 is at least as large as diameter dimension 6 of port 4. More preferably depth 7 of port 4 is twice its diameter 6, yet more preferably depth 7 of port 4 is five times its diameter 6. Detection circuit 5 comes with suitable dimensions that enable (complete) insertion of detection circuit 5 in port 4.

It is envisaged that sensor member 3 is flush mounted to the end wall 12 of port 4. End wall 12 of port 4 terminates port 4. According to an aspect, end wall 12 comprises an end plate. End wall 12 of port 4 is advantageously perpendicular or substantially perpendicular to a side wall 13 of port 4. In an embodiment, side wall 13 comprises a guide runner. It is also envisaged that port 4 comprises at least two parallel guide runners. These guide runners are advantageously arranged along opposite walls of port 4.

According to an aspect, detection circuit 5 is an electric circuit arranged on a (printed) circuit board. In addition to sensor member 3, detection circuit 5 also comprises a signal conditioning member 8. Signal conditioning member 8 may, by way of non-limiting example, comprise an (operational) amplifier. The (operational) amplifier advantageously comes as an integrated circuit. Detection circuit 5 may, by way of another non-limiting example, also comprise lead wires 9, 10.

It is envisaged that detection circuit 5 has a dimension that exceeds the depth dimension of port 4. Detection circuit 5 can thus not be fully inserted in port 4. That is, parts of detection circuit 5 such as lead wires 9, 10 or wiring terminals 9, 10 may stand proud of an outer surface of refraction body 1.

In an embodiment, port 4 and detection circuit 5 provide suitable fixation members for mounting detection circuit 5 to port 4. Suitable fixation members comprise nuts, bolts, plugs etc. This list of suitable fixation members is not exhaustive.

Beam-splitter 2 has a lateral dimension 11 that is parallel to diameter dimension 6 of port 4. Lateral dimension 2 of beam-splitter 11 ideally exceeds diameter 6. In an alternate embodiment, lateral dimension 11 of beam-splitter 2 is at least 90% of diameter dimension 6. In yet another embodiment, lateral dimension 11 of beam-splitter 2 is at least 70% of diameter dimension 6.

Lateral dimension 11 can be projected in a direction parallel to side-wall 13 of port 4 on end-wall 12 of port 4. It is envisaged that this projection covers all of the area of the end-wall 12 of port 4. In an alternate embodiment, the projection of lateral dimension 11 on the end-wall 12 of port 4 covers at least 90% of the area of end-wall 12. In yet another embodiment, the projection of lateral dimension 11 on the end-wall 12 of port 4 covers at least 40% or at least 50% of the area of end-wall 12.

In an embodiment, photodiode is a silicon diode. It is desirable for purposes of flame detection that photodiode exhibits a low value of parasitic parallel resistivity. A photocurrent produced by diode may otherwise be consumed by the parasitic parallel resistivity of photodiode.

It is also desirable to employ a photodiode with a small temperature coefficient. A small temperature coefficient makes the device and its circuit less sensitive to changes in temperature inside a combustion appliance. The temperature coefficient *TC₁* of the short-circuit current *I_{SC}* (at 25 degrees Celsius) is preferably less than 0.5%/Kelvin, even more preferred less than 0.3%/Kelvin, yet more preferred less than 0.%/Kelvin or even 0.04%/Kelvin.

In addition, photodiode ought to exhibit a spectral sensitivity λ_{0%} that matches and / or overlaps with the signal obtained from a flame in a combustion appliance. In an advantageous configuration, photodiode exhibits a spectral sensitivity λ_{0%} between 200 nm and 800 nm, yet more preferred between 300 nm and 800 nm, even more preferred between 400 nm and 800 nm. Advantageously, photodiode exhibits a spectral sensitivity at infrared wavelengths such as 800 nm that is less than 20%, preferably less than 0%, the sensitivity at 600 nm wavelength.

Photodiode may, in a particular embodiment, be a type VEMD550 and / or a SFH2240 device. According to an aspect, photodiode is implemented as a surface-mounted device (SMD). Surface-mounted devices allow low cost manufacture at large scale. Surface-mounted device also allow miniaturized circuits. Photodiode ideally withstands elevated temperatures inside a combustion appliance, in particular elevated temperatures inside or near a burner chamber of a combustion appliance.

Refraction body 1 as shown on FIG 1 provides a first outer surface 14. First outer surface 14 of refraction body 1 is configured to receive a first light signal such as a first light beam and / or a first ray of light from a first light source 15a. FIG 1 depicts a first arrangement of refraction body 1 and a first light source 15a.

The light signal received by the first outer surface 14 advantageously is a light signal with (principal) spectral components in the range of visible light between 400 nm and 800 nm. The light source 15a advantageously is a combustion chamber with an aperture 16a and / or with a window 16a and / or with a lens 16a and / or with a mushroom-shaped glass body 16a. It is also envisaged that window 16a and / or mushroom-shaped glass body 16a connects to first outer surface 14 of refraction body 1 via a fibre-optic cable.

Due to a refraction index n > 1.0003 of refraction body 1, a beam of light 18 originating from first light source 15a and incident on surface 14 is bent. That beam will bend toward an angle normal to first outer surface 14, if the refraction index of body 1 exceeds that between surface 14 and source 15a. In other words, a beam of light arrives at a first angle θ₁ to a normal to first outer surface 14. The same beam of light is transmitted toward beam-splitter 2 at a second angle θ₂ to a normal to surface 14 with θ₂ less than or equal to θ₁. The first angle θ₁ will be equal to the second angle θ₂, if the beam of light arrives in a direction perpendicular to surface area 14. That is, the first angle θ₁ will be equal to the second angle θ₂, if θ₁ = θ₂ = 0.

As a light beam arrives at beam-splitter 2, a first portion of the intensity of light beam 18 gets reflected whilst a second portion of the intensity of light beam 18 gets transmitted. In a particular embodiment, beam-splitter 2 reflects a 30% portion of (the intensity of) light beam 18 received from first outer surface 14. In another particular embodiment, beam-splitter 2 reflects a 50% portion of (the intensity of) light beam 18 received from first outer surface 14. In yet another particular embodiment, beam-splitter 2 reflects a 70% or a 90% portion of (the intensity of) light beam 18 received from first outer surface 14. The aforementioned portions of reflected intensities refer to visible light in the range between 400 nm and 800 nm. The aforementioned list of particular embodiments is not exhaustive.

Beam-splitter 2 has a lateral dimension 17 parallel to first outer surface 14. The area of first outer surface 14 advantageously fully comprises a projection of lateral dimension 17 on first outer surface 14 in a direction normal to outer surface 14. In another embodiment, the area of first outer surface 14 contains 90% of this projection. In yet another embodiment, the area of first outer surface 14 comprises 70% of this projection. It is envisaged that first outer surface 14 is flat or substantially flat. It is also envisaged that first outer surface 14 is arcuate or substantially arcuate.

Refraction body 1 then transmits the reflected portion 19 of light beam 18 toward port 4. Reflected portion 19 of light beam 18 is advantageously transmitted toward end wall 12 of port 4. Eventually, end wall 12 of port 4 receives a reflected portion 19 of first light beam 18. It is envisaged that sensor member 3 is flush mounted to end wall 12. Reflected portion 19 of first light beam 18 is thus received by sensor member 3. It is also envisaged that sensor member 3 is disposed at a distance from end wall 12. Accordingly, reflected portion 19 of first light beam 18 is refracted at end wall 12 before it is received by sensor member 3.

In other words, there is a first optical path 18, 19 originating from first light source 15a through aperture 16a that involves first outer surface 14. The same optical path 18, 19 also passes through a portion of refraction body 1 and involves beam-splitter 2 as well as end wall 12 of port 4. First optical path 18, 2, 19 terminates at sensor member 3.

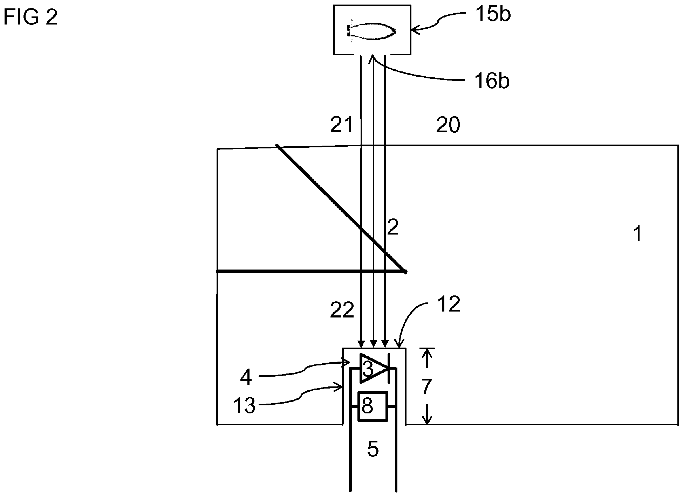

Refraction body 1 as shown on FIG 2 also provides a second outer surface 20. Second outer surface 20 of refraction body 1 is configured to receive a second light signal such as a second light beam and / or a second ray of light from a light source 15b. FIG 2 depicts an arrangement of refraction body 1 and a second light source 15b. The arrangement of FIG 2 differs from the arrangement of FIG 1. The arrangement of second source 15b relative to body 1 on FIG 1 is different from the arrangement of first source 15a relative to body 1 on FIG 2.

It is envisaged that surface areas 14 and 20 do not overlap. That is, the area of overlap between surfaces 14 and 20 is zero. Surface areas 14 and 20 are thus free from overlap. In other words, first surface area 14 is distinct from second surface area 20.

The light signal received by the second outer surface 20 advantageously is a light signal with (principal) spectral components in the range of visible light between 400 nm and 800 nm. The second light source 15b advantageously is a combustion chamber with an aperture 16b and / or with a window 16b and / or with a lens 16b and / or with a mushroom-shaped glass body 16b. It is also envisaged that window 16b and / or mushroom-shaped glass body 16b connects to second outer surface 20 of refraction body 1 via a fibre-optic cable.

Due to a refraction index n > 1.0003 of refraction body 1, a beam of light 21 originating from second light source 15b and incident on surface 20 is bent. That beam will bend toward an angle normal to second outer surface 20, if the refraction index of body 1 exceeds that between surface 20 and source 15b. In other words, a beam of light arrives at a third angle θ₃ to a normal to second outer surface 20. The same beam of light is transmitted toward beam-splitter 2 at a fourth angle θ₄ to a normal to surface 20 with θ₃ less than or equal to θ₄. The third angle θ₃ will be equal to the second angle θ₄, if the beam of light arrives in a direction perpendicular to surface area 20. That is, the third angle θ₃ will be equal to the fourth angle θ₄, if θ₃ = θ₄ = 0.

As a light beam arrives at beam-splitter 2, a first portion of the intensity of light beam 21 gets reflected whilst a second portion of (the intensity of) light beam 21 gets transmitted. In a particular embodiment, beam-splitter 2 transmits a 30% portion of (the intensity of) light beam 21 received from second outer surface 20. In another particular embodiment, beam-splitter 2 transmits a 50% portion of (the intensity of) light beam 21 received from second outer surface 20. In yet another particular embodiment, beam-splitter 2 transmits a 70% or a 90% portion of (the intensity of) light beam 21 received from second outer surface 20. The aforementioned portions of reflected intensities refer to visible light in the range between 400 nm and 800 nm. The aforementioned list of particular embodiments is not exhaustive.

Beam-splitter 2 has a lateral dimension 11 parallel to second outer surface area 20. The area of second outer surface 20 advantageously fully comprises a projection of lateral dimension 11 on second outer surface 20 in a direction normal to outer surface 20. In another embodiment, the area of second outer surface 20 contains 90% of this projection. In yet another embodiment, the area of second outer surface 20 comprises 70% of this projection. It is envisaged that second outer surface 20 is flat or substantially flat. It is also envisaged that second outer surface 20 is arcuate or substantially arcuate.

Refraction body 1 then transmits transmitted portion 22 of light beam 21 toward port 4. Transmitted portion 22 of light beam 21 is advantageously transmitted toward end wall 12 of port 4. Eventually, end wall 12 of port 4 receives a transmitted portion 22 of second light beam 21. It is envisaged that sensor member 3 is flush mounted to end wall 12. Transmitted portion 22 of second light beam 21 is thus received by sensor member 3. It is also envisaged that sensor member 3 is disposed at a distance from end wall 12. Accordingly, transmitted portion 22 of first light beam 20 is refracted at end wall 12 before it is received by sensor member 3.

In other words, there is a second optical path 21, 22 originating from second light source 15b through aperture 16b that involves second outer surface 20. The same optical path 21, 22 also passes through a portion of refraction body 1 and involves beam-splitter 2 as well as end wall 12 of port 4. Second optical path 21, 22 terminates at sensor member 3.

The instant disclosure is about light collection in a combustion appliance. Combustion appliance may, by way of non-limiting example, be a combustion engine, a cogeneration plant, a gas turbine, an appliance for heating, ventilation, air-conditioning and / or a gas-fired and / or an oil-fired burner. Combustion appliance may, by way of another non-limiting example, be a gas-fired and / or an oil-fired installation with a boiler.

It is envisaged that an optics actuator such as a stepper motor may alter the position of refraction body 1. To that end, an actuator mechanically couples to refraction body 1. When actuator is a stepper motor, actuator may pivot refraction body 1 inside a combustion apparatus.

According to an aspect, a circuit controller sets the position of the aforementioned actuator. That is, combustion appliance comprises a circuit controller that adjusts the orientation of refraction body 1 through the actuator. Ideally, controller and actuator pivot refraction body 1 together with detection circuit 5 and / or with sensor member 3, since these members 3, 5 are mounted to refraction body 1.

In an embodiment, circuit controller also receives signals from sensor member 3. Ideally, controller receives signals from sensor member 3 via detection circuit 5. To that end, controller (uni-directionally or bidirectionally) communicates with detection circuit 5. Controller is preferably configured to optimize the signal-to-noise ratio of the signal from sensor member 3 by pivotal movement of refraction body 1. Controller may, by way of non-limiting example, employ proportional, integral, and / or derivative control to adjust and / or optimize the orientation of refraction body 1 in a step-wise manner. Circuit controller may, by way of another non-limiting example, perform functional checks and / or diagnosis of the assembly comprising sensor member 3 and actuator.

It is also envisaged that the aforementioned circuit controller is part of detection circuit 5. Controller may also comprise a communication port with a suitable communication protocol. Communication port of controller may, by way of non-limiting example, connect to a I2C bus. Communication port of controller may, by way of non-limiting example, connect to an ethernet bus, in particular to an ethernet bus providing power-over-ethernet. By connecting controller to a suitable bus, controller may receive data and / or instructions from a system controller such as a combustion appliance controller. Instructions and / or data received from system controller include, but are not limited to, instructions and / or data for a stepper-motor to position refraction body 1.

Circuit controller may as well transmit data to a system controller such as combustion appliance controller. Data transmitted to a system controller include, but are not limited to, position information related to an actuator, signal-to-noise ratios related to sensor member 3, signal strength and / or dark current in relation to sensor member 3 etc.

In a particular embodiment, a system controller performs (proportional, integral and / or derivative) optimization together with circuit controller (installed as part of detection circuit 5). To that end, circuit controller sends signals obtained from sensor member 3 via its communication port and through a bus connection to a system controller. System controller processes data received from circuit controller and generates an actual signal. The generated actual signal preferably relates to signal strength and / or signal-to-noise ratio of sensor member 3. System controller then employs an optimization algorithm to generate a control signal. The control signal is sent to circuit controller, which (via actuator) pivots refraction body 1 accordingly. System controller and circuit controller iterate these steps until an optimum orientation of refraction body 1 is found. Suitable optimization algorithms include, but are not limited to, genetic optimization algorithms and / or gradient descent algorithms.

In other words, the instant disclosure teaches a refraction body 1 for a combustion appliance, the refraction body 1 comprising:
a first surface area 14 configured to receive a first light signal,
a second surface area20 configured to receive a second light signal,
wherein the second surface area 20 is distinct from the first surface area 14,
a port 4 configured for insertion and / or introduction of a detection circuit 5,
a beam-splitter 2 disposed inside the refraction body 1,
wherein the first surface area 14 is configured to refract the first light signal such that the first light signal is transmitted through the refraction body 1 to the beam-splitter 2,
wherein the second surface area 20 is configured to refract the second light signal such that the second light signal is transmitted through the refraction body 1 to the beam-splitter 2,
wherein the beam-splitter 2 is configured to reflect a first portion 19 of the first light signal toward the port 4 such that a first optical path 18, 2, 19 is formed with segments from the first surface area 14 to the beam-splitter 2 and from the beam-splitter 2 to the port 4,
wherein the beam-splitter 2 is configured to transmit a second portion 22 of the second light signal toward the port 4 such that a second optical path 21, 2, 22 is formed with segments from the second surface area 20 to the beam-splitter 2 and from the beam-splitter 2 to the port 4,
wherein the port 4 is configured to receive the first reflected portion 19 of light and to transmit the first reflected portion 19 of light to a detection circuit 5 inserted and / or introduced into the port 4,
wherein the port 4 is configured to receive the second transmitted portion 22 of light and to transmit the second transmitted portion 22 of light to a detection circuit 5 inserted and / or introduced into the port 4.

It is envisaged that the port 4 is configured to receive the first reflected portion 19 of light and to refract the first reflected portion 19 of light such that the first reflected portion 19 of light is transmitted through the port 4 to a detection circuit 5 inserted and / or introduced into the port 4. According to an aspect, an end wall 12 of port 4 receives and refracts the first reflected portion 19 of light.

In an embodiment, port 4 is configured for partial insertion and / or partial introduction of a detection circuit 5.

In an embodiment, port 4 is configured for complete insertion and / or complete introduction of a detection circuit 5,

It is also envisaged that the port 4 is configured to receive the second transmitted portion 22 of light and to refract the second transmitted portion 22 of light such that the second transmitted portion 22 of light is transmitted through the port 4 to a detection circuit 5 inserted and / or introduced into the port 4. According to an aspect, an end wall 12 of port 4 receives and refracts the second transmitted portion 22 of light.

The first light signal advantageously has (relevant spectral components) with optical wavelengths between 400 nm and 800 nm. The second light signal advantageously has (relevant spectral components) with optical wavelengths between 400 nm and 800 nm.

The refraction body 1 ideally has a maximum outer dimension of less than 100 mm, more ideally of less than 50 mm, yet more ideally of less than 20 mm. The maximum outer dimension of the refraction body 1 is the longest distance between any two points along a surface enveloping the refraction body 1.

The instant disclosure also teaches one of the aforementioned refraction bodies 1, wherein the first optical path 18, 2, 19 and the second optical path 21, 2, 22 both comprise the same beam-splitter 2.

The instant disclosure also teaches one of the aforementioned refraction bodies 1, wherein the first light signal is a first light beam and the second light signal is a second light beam and wherein the first reflected portion of light 19 is a first reflected portion of the first light beam and the second transmitted portion of light 22 is a second transmitted portion of the second light beam.

The instant disclosure also teaches one of the aforementioned refraction bodies 1, wherein the port 4 comprises (or is) a slot and / or a recess and / or a depression with an aperture for insertion of a detection circuit 5, with an end wall 12 and with a depth dimension 7 from the aperture to the end wall 12, the aperture having a diameter dimension 6,
wherein the depth dimension 7 is equal to or larger than the diameter dimension 6 of the aperture.

According to an aspect, the port 4 extends into the refraction body 1 by the depth dimension 7.

According to an aspect, the depth dimension 7 is at least twice the diameter dimension 6 of the aperture. According to another aspect, the depth dimension 7 is at least five times the diameter dimension 6 of the aperture.

It is envisaged that the diameter dimension 6 of the aperture is at least 0.5 mm, yet more preferred at least 1 mm, still more preferred 2mm.

It is envisaged that the depth dimension 7 of the port 4 is at least 2.5 mm, yet more preferred at least 5 mm, still more at least preferred 10mm.

The instant disclosure also teaches one of the aforementioned refraction bodies 1, wherein the depth dimension 7 is perpendicular or substantially perpendicular to the diameter dimension 6 of the aperture.

The instant disclosure also teaches one of the aforementioned refraction bodies 1, wherein the depth dimension 7 starts at a point on the aperture and ends at a point on the end wall 12.

The instant disclosure also teaches one of the aforementioned refraction bodies 1, wherein the end wall 12 comprises or is an end plate.

It is envisaged that the aperture of the port 4 comprises an outer rim. The diameter dimension 6 is the largest distance between any two points on that rim.

The instant disclosure also teaches one of the aforementioned refraction bodies 1, wherein the refraction body 1 comprises a detection circuit 5 inserted and / or introduced into the port 4.

The instant disclosure also teaches one of the aforementioned refraction bodies 1, wherein the refraction body 1 comprises a detection circuit 5 partially inserted and / or partially introduced into the port 4.

The instant disclosure also teaches one of the aforementioned refraction bodies 1, wherein the detection circuit 5 comprises a sensor element 3,
wherein the sensor element 3 is configured to produce an electric current in response to receiving an amount of light.

The instant disclosure also teaches one of the aforementioned refraction bodies 1, wherein the port 4 comprises at least a wall with a surface area,
wherein the sensor member 3 is flush mounted to the surface area of the at least a wall of the port 4. The at least a wall of the port 4 ideally is the end wall 12 of the port 4 and / or the end plate 12 of the port 4.

The instant disclosure also teaches one of the aforementioned refraction bodies 1, wherein the sensor element 3 is arranged inside the port 4 such that the port 4 is configured to transmit the first reflected portion 19 of light to the sensor element 3 of the detection circuit 5 and
wherein the sensor element 3 is configured to receive the first reflected portion 19 of light and
wherein the sensor element 3 is configured to produce an electric current in response to receiving the first reflected portion 19 of light.

The instant disclosure also teaches one of the aforementioned refraction bodies 1, wherein the sensor element 3 is arranged inside the port 4 such that port 4 is configured to transmit the second transmitted portion 22 of light to the sensor element 3 of the detection circuit 5 and
wherein the sensor element 3 is configured to receive the second transmitted portion 22 of light and
wherein the sensor element 3 is configured to produce an electric current in response to receiving the second transmitted portion 22 of light.

The instant disclosure also teaches one of the aforementioned refraction bodies 1, wherein the refraction body 1 is made of a material with an attenuation length of less than 1 mm at an optical wavelength of 800 nm. The instant disclosure also teaches one of the aforementioned refraction bodies 1, wherein the refraction body 1 is made of a material with an attenuation length of more than 1 mm, yet more preferred more than 2 mm, still more preferred more than 5 mm at an optical wavelength of 600 nm.

The instant disclosure also teaches one of the aforementioned refraction bodies 1, wherein the refraction body 1 comprises a filter element for attenuation of infrared light, wherein the filter element is made of a material with an attenuation length of less than 1 mm, preferably less than 0.1 mm, yet more preferably less than 0.01 mm at an optical wavelength of 800 nm.

The instant disclosure also teaches one of the aforementioned refraction bodies 1, wherein the refraction body 1 comprises a filter element for attenuation of infrared light, wherein the filter element is made of a material with an attenuation length of less than 1 mm, preferably less than 0.1 mm, yet more preferably less than 0.01 mm at an optical wavelength of 1000 nm.

The instant disclosure also teaches one of the aforementioned refraction bodies 1, wherein the refraction body 1 comprises a filter element for attenuation of infrared light, wherein the filter element is made of a material with an attenuation length of less than 1 mm, preferably less than 0.1 mm, yet more preferably less than 0.01 mm at an optical wavelength of 1200 nm.

In the present disclosure, an attenuation length is the distance into the respective material when the probability has dropped to 1/e that a light particle has not been absorbed.

The instant disclosure also teaches one of the aforementioned refraction bodies 1, wherein the filter element is arranged in the first optical path and in the second optical path such that the filter element is configured to absorb or to substantially absorb light signals propagating along the first optical path 18, 2, 19 with optical wave lengths above 800 nm, preferably above 1000 nm, yet more preferably above 1200 nm, and is configured to absorb or to substantially absorb light signals propagating along the second optical path 21, 2, 22 with optical wave lengths above 800 nm, preferably above 1000 nm, yet more preferably above 1200 nm.

The instant disclosure also teaches one of the aforementioned refraction bodies 1, wherein the filter element has a maximum outer dimension that is less than half, ideally less than a fifth, yet more ideally less than a tenth, of the maximum outer dimension of the refraction body (1). The maximum outer dimension of the filter element is the longest distance between any two points along a surface enveloping the filter element.

Any steps of a method according to the present application may be embodied in hardware, in a software module executed by a processor, in a cloud computing arrangement, or in a combination thereof. The software may include a firmware, a hardware driver run in the operating system, or an application program. Thus, the invention also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other IT equipment and appliance.

It should be understood that the foregoing relates only to certain embodiments of the invention and that numerous changes may be made therein without departing the scope of the invention as defined by the following claims. It should also be understood that the invention is not restricted to the illustrated embodiments and that various modifications can be made within the scope of the following claims.

### Reference numerals

- 1: refraction body
- 2: beam-splitter
- 3: sensor member
- 4: port
- 5: detection circuit
- 6: first dimension of port 4
- 7: second dimension of port 4
- 8: signal processing circuit
- 9: lead wire
- 10: lead wire
- 11: first lateral dimension of beam-splitter 2
- 12: end wall of port 4
- 13: side wall of port 4
- 14: first surface of refraction body 1
- 15a: light source
- 16a: aperture
- 17: second lateral dimension of beam-splitter 2
- 18: first light beam
- 19: reflected first light beam
- 20: second outer surface
- 21: second light beam
- 22: transmitted second light beam

## Claims

1. A refraction body (1) for a combustion appliance, the refraction body (1) comprising:
a first surface area (14) configured to receive a first light signal,
a second surface area(20) configured to receive a second light signal,
wherein the second surface area (20) is distinct from the first surface area (14),
a port (4) configured for insertion of a detection circuit (5),
a beam-splitter (2) disposed inside the refraction body (1),
wherein the first surface area (14) is configured to refract the first light signal such that the first light signal is transmitted through the refraction body (1) to the beam-splitter (2),
wherein the second surface area (20) is configured to refract the second light signal such that the second light signal is transmitted through the refraction body (1) to the beam-splitter (2),
wherein the beam-splitter (2) is configured to reflect a first portion (19) of the first light signal toward the port (4) such that a first optical path (18, 2, 19) is formed with segments from the first surface area (14) to the beam-splitter (2) and from the beam-splitter (2) to the port (4),
wherein the beam-splitter (2) is configured to transmit a second portion (22) of the second light signal toward the port (4) such that a second optical path (21, 2, 22) is formed with segments from the second surface area (20) to the beam-splitter (2) and from the beam-splitter (2) to the port (4),
wherein the port (4) is configured to receive the first reflected portion (19) of light and to transmit the first reflected portion (19) of light to a detection circuit (5) inserted into the port (4),
wherein the port (4) is configured to receive the second transmitted portion (22) of light and to transmit the second transmitted portion (22) of light to a detection circuit (5) inserted into the port (4).

2. The refraction body (1) according to claim 1, wherein the first optical path (18, 2, 19) and the second optical path (21, 2, 22) both comprise the same beam-splitter (2).

3. The refraction body (1) according any of the claims 1 to 2, wherein the first light signal is a first light beam and the second light signal is a second light beam and wherein the first reflected portion of light (19) is a first reflected portion of the first light beam and the second transmitted portion of light (22) is a second transmitted portion of the second light beam.

4. The refraction body (1) according to any of the claim 1 to 3, wherein the port (4) comprises a slot with an aperture for insertion of a detection circuit (5), with an end wall (12) and with a depth dimension (7) from the aperture to the end wall (12), the aperture having a diameter dimension (6),
wherein the depth dimension (7) is equal to or larger than the diameter dimension (6) of the aperture.

5. The refraction body (1) according to claim 4, wherein the depth dimension (7) is perpendicular to the diameter dimension (6) of the aperture.

6. The refraction body (1) according to any of the claims 4 to 5, wherein the depth dimension (7) starts at a point on the aperture and ends at a point on the end wall (12).

7. The refraction body (1) according to any of the claims 4 to 6, wherein the end wall (12) comprises an end plate.

8. The refraction body (1) according to any of the claims 1 to 7, wherein the refraction body (1) comprises a detection circuit (5) inserted into the port (4).

9. The refraction body (1) according to claim 8, wherein the detection circuit (5) comprises a sensor element (3),
wherein the sensor element (3) is configured to produce an electric current in response to receiving an amount of light.

10. The refraction body (1) according to claim 9, wherein the port (4) comprises at least a wall with a surface area,
wherein the sensor member (3) is flush mounted to the surface area of the at least a wall of the port (4).

11. The refraction body (1) according to any of the claims 9 to 10, wherein the sensor element (3) is arranged inside the port (4) such that the port (4) is configured to transmit the first reflected portion (19) of light to the sensor element (3) of the detection circuit (5) and
wherein the sensor element (3) is configured to receive the first reflected portion (19) of light and
wherein the sensor element (3) is configured to produce an electric current in response to receiving the first reflected portion (19) of light.

12. The refraction body (1) according to any of the claims 9 to 11, wherein the sensor element (3) is arranged inside the port (4) such that port (4) is configured to transmit the second transmitted portion (22) of light to the sensor element (3) of the detection circuit (5) and
wherein the sensor element (3) is configured to receive the second transmitted portion (22) of light and
wherein the sensor element (3) is configured to produce an electric current in response to receiving the second transmitted portion (22) of light.

13. The refraction body (1) according to any of the claims 1 to 12, wherein the refraction body (1) is made of a material with an attenuation length of less than 1 mm at an optical wavelength of 800 nm.

14. The refraction body (1) according to any of the claims 1 to 13, wherein the refraction body (1) comprises a filter element for attenuation of infrared light, wherein the filter element is made of a material with an attenuation length of less than 1 mm at an optical wavelength of 800 nm.

15. The refraction body (1) according to claim 14, wherein the filter element is arranged in the first optical path and in the second optical path such that the filter element is configured to absorb or to substantially absorb light signals with optical wave lengths above 800 nm propagating along the first optical path (18, 2, 19) and is configured to absorb or to substantially absorb light signals with optical wave lengths above 800 nm propagating along the second optical path (21, 2, 22).
